# EUROPEAN PATENT APPLICATION

(11) **EP 2 068 034 A2**
(43) Date of publication of application: **10.06.2009**
(21) Application number: 08380330.4
(22) Date of filing: 03.12.2008
(51) Int. Cl.: F16F 9/53

(54) **Pro-active magnetorheological suspension system**

(30) Priority: 03.12.2007 ES 200703196; 01.12.2008 ES 200803409
(71) Applicant: Muñoz Labrador, Francisco Javier, 17404 Riells i Viabrea Gerona (ES)
(72) Inventor: Muñoz Labrador, Francisco Javier, 17404 Riells i Viabrea Gerona (ES)
(74) Representative: Gil-Vega, Victor

(57) **Abstract**

The suspension system is based on the association of a spring (1) and a damper (2) that includes a cylinder (3) with a sliding piston (4) that establishes two chambers, one for extension (5) and another one for compression (7), that are mutually communicated. Said damper presents the particularity of including one external balance chamber (17) communicated with an extension chamber (5) in order to compensate the fluid during piston strokes (4). Furthermore, the stem (12) emerging from the piston (4) is hollow and houses a concentric rod inside (13), on whose end a spool (14) supplied by a controller (23) is mounted in order to obtain a magnetic field that, applied to the fluid (rheological) of the hydraulic circuit, causes the viscosity of said fluid to change and, thus, a variation in the hydraulic force of the damper.

## Description

### OBJECT OF THE INVENTION

The present invention relates to a pro-active magnetorheological suspension system, applicable in the automotive field, and more specifically in motorcycles, based on the physical materialization of conventionally used hydraulic suspension dampers, but incorporating an additional fluid compensation chamber by means of valve devices on at least a fixed piston as valve per valve device characterizing the sliding piston, and a spool generating a magnetic field applicable to the fluid (which will be a rheological fluid), which allows to obtain a variation of the hydraulic force of the damper itself.

The object of the invention is to optimize the dimensional control of the hydraulic set of a damper corresponding to a suspension system, providing greater operating stability, grip, balance, and safety to the vehicle on which it is applied.

### BACKGROUND OF THE INVENTION

As it is known in the art, two elements functionally associated to each other intervene in the suspension of a motorcycle, one of them corresponding to a main spring, as elastic element absorbing the stress exerted on the different protuberances, as well as the metal piece whose force is used to recover its natural position, while the other element corresponds to a damper designed to progressively reduce the intensity of a periodical phenomenon that the aforementioned spring tends to generate.

Specifically, the dampers used in motorcycles are basically made up by a cylinder inside of which a sliding piston slides generating two chambers, one for compression and another for expansion.

Said two chambers communicate mutually through conveniently calibrated holes or tracts to appropriately delay fluid transfers between chambers, in order to achieve the desired damping effect.

This type of dampers with the main spring associated thereto are fixed on one of their ends to a fixed part of the motorcycle, for example, the upper section of the frame or structure thereof and, on another of the connecting rods, to the ends of the wheel of the motorcycle itself.

Obviously, dampers are manufactured without the possibility of compensating the pressure in the compression chamber creating positive or negative balances as required during their functionability, and without the possibility of changing their hydraulic force in a controlled manner, their performance being therefore concrete and limited.

### DESCRIPTION OF THE INVENTION

The suspension system advocated, based on the type of damping effect referred to in the foregoing section, presents a set of particularities that translate into significant advantages with respect to conventional ones, as it will be set forth throughout the present description.

Specifically, the suspension system of the invention, including the main spring and the cylinder with the two chambers established by the internal sliding piston, following convention, presents as first novel characteristic the fact that the damper is fitted out with a third chamber, called the "balance" chamber, which is external to the cylinder, and is connected to one of the chambers of the two established in said cylinder, thus enabling to compensate the fluid in a controlled manner during the motion to which the piston is subject during the performance of the damper itself.

A second novel characteristic of the damper corresponds to the incorporation of a spool connected to the end of a rod that is fitted concentrically on the inside of the corresponding hollow stem belonging to the sliding piston in the cylinder. Said spool is mounted on the end of the rod that will remain in correspondence with the external end of the hollow stem, in a way such that through an external controller the spool receives the appropriate and variable intensity to create a magnetic field, which will be applied through the rod on the circulating fluid of the hollow stem.

The fluid used is a rheological fluid, that is, a base carrier hydraulic fluid with iron particles suspended therein, in a way such that in the presence of a magnetic field fluid viscosity variations can be achieved, thus obtaining a controlled variation of the hydraulic force of the damper.

Consequently, as per the invention, it is possible to change the viscosity of the fluid contained in the damper, and at the same time the stiffness of the latter, allowing to adapt the hydraulic force to changing road conditions, and the different control parameters, with said parameters being electrically commanded by means of the above referred controller, in order to be able to proportionally change the properties of the damper, and therefore, of the suspension assembly, the controller being connected to the respective vehicle electronic control unit, whereby the data from the different sensors and significant parameters can be retrieved for the basic configuration of the controller.

Thus, it is possible to obtain a contained weight of the assembly, which shall not exceed that of alternative passive or semi-active systems. In other words, based on balance variables within the compensation chamber of the extension, and mainly compression chambers, together with the electromagnetic configuration built in the damper, it is possible to optimize the dimensional control of the hydraulic assembly, by providing, finally, a greater control as regards stability, as well as operating grip, balance and safety.

In accordance with one embodiment, the aforementioned rod, instead of being solidarized to the electromagnetic spool that generates the magnetic field transmitted to the rheological fluid by means of said rod, is assembled in floating manner on the stem of the piston thanks to its ferrous load or magnetism of same polarity to the spool, that is, with the possibility of travelling axially or, in other words, being physically independent from said spool, therefore acting also as electromagnetic bidirectional hydraulic brake.

### DESCRIPTION OF THE DRAWINGS

To complement the description that will be subsequently provided, and with the purpose of helping out in understanding better the characteristics of the invention, in accordance with a preferred example of an embodiment thereof, as integral part of said description, two sheets of drawings are appended, in which, in an illustrative, but not limiting manner, the following has been represented:
Figure 1.- Shows a general outline, as per a side vertical section, of the pro-active magnetorheological suspension system that constitutes the object of the present invention.
Figure 2.- Shows, as per a representation similar to figure 1, the embodiment mentioned for said system.

### PREFERRED EMBODIMENT OF THE INVENTION

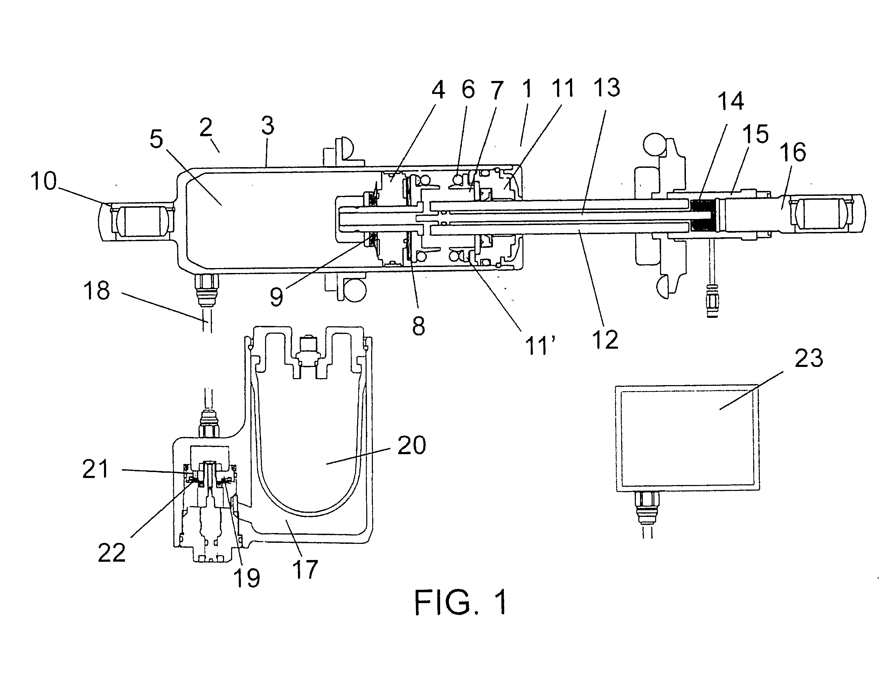

As shown in figure 1, the invention's suspension system includes, following convention, a main spring (1), and a damper (2), functionally associated, the damper being comprised by a cylinder (3) housing a sliding piston (4) that establishes two chambers, one for extension (5) and another one for compression (7). Both chambers (5 and 7) are mutually communicated in a calibrated manner, by means of the fitted-out compression (8) and extension (9) valves, which are associated to the corresponding holes or tracts of the piston (4) seated on the extension spring or counter spring (6), allowing fluid to pass in an unidirectional manner for each of the two groups of tracts; in other words, some allow fluid to pass from the compression chamber (7) to the extension chamber (5), while other tracts allow the fluid to pass from the extension chamber (5) to the compression chamber (7).

On the other hand, one of the ends of the cylinder (3) has been designed to be equipped with a fastening element or shackle (10) to fix it to the mechanical element or fixed part of the vehicle where it is applied, while the other end has a catch box (11) which closes said end, through which the stem (12) of the piston (4) emerges axially, all the foregoing following convention.

Now therefore, in accordance with the novel characteristics of the invention, the stem (12) has been designed to be hollow, with an rod or leak-tight pin (13) housed in its interior, in whose free end a spool (14) is attached, following which a height or length regulator (15) has been provided; capped in the second fixing point (16) of the assembly to the wheel or moving mechanical part of the vehicle.

The rod or pin (13) acts as fixed pass-through restrictor inside the hollow stem (12) and also on the material that provides the circulation of the magnetic field generated by said spool (14), through the corresponding fluid, while the extension spring (6) acts as mechanical brake in extension, and at the same time enables the closure on the catch box (11) by means of a tapered section guide bushing (11'), acting as bidirectional hydraulic brake located outside said hollow stem (12).

For its part, the mentioned spool (14) is designed to be capable of changing the magnetic field generated through the rheological fluid, while a controller (23) generates a variable signal with an instantaneous response over it, which provides greater or lower intensity, as required.

Said controller (23) is based on a microcontroller where a light program is executed (firmware), and is equipped with a set of outlets (one per damper) which are capable of applying a variable electrical intensity from 0 to 4 amperes, and a 12 V inlet from the force supply source, or battery, its consumption being significantly lower and contained.

The program executed by the controller (23) contains the damper controlling algorithms, algorithms that determine the intensity to be applied to each of the dampers based on control driving variables, the operating conditions being also variable during its operation.

On the other hand, it has been foreseen that an extension chamber (5) be connected to an external chamber (17) called "balance" chamber, showing the connection conduit (18) between the two of them. Said balance chamber (17) is equipped with a fixed balance piston (19), which is unidirectional and associated to a gas body (20) with pressure above or below the atmospheric pressure, with the purpose of compensating the hydraulic projections generated mainly in the compression chamber (7).

The fixed piston (19) includes a set of holes or tracts (21) associated, at the same time, to a set of valves seating on a spring valve (22), providing for the communication in both directions between the balance chamber (17) and the extension (5) and compression (7) chambers.

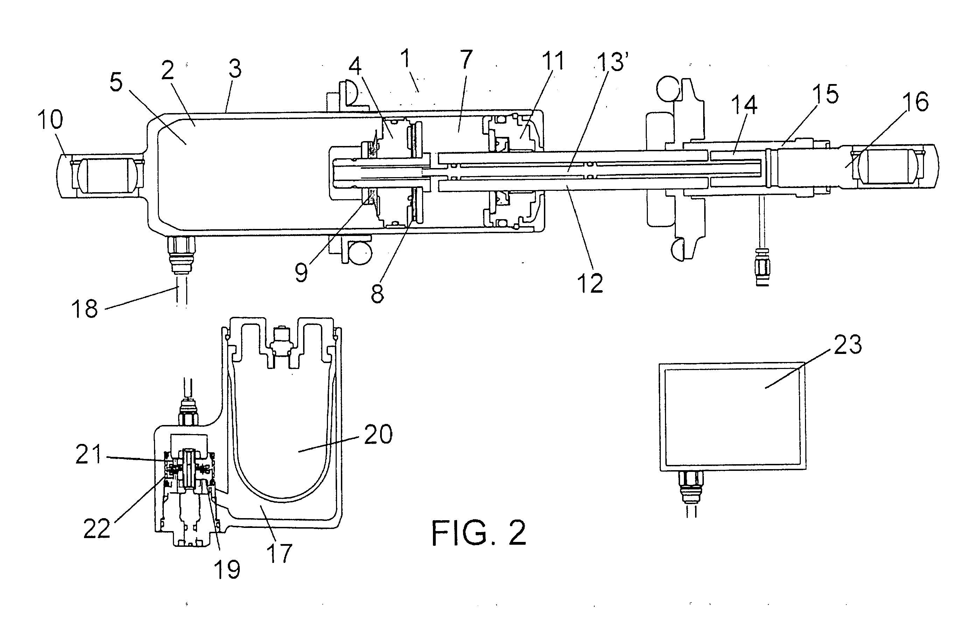

The system can be considerably simplified, as depicted in figure 2, by removing the extension spring (6), and the complementary guide bushing, or bidirectional limited brake (11') from it, assembling the magnetized rod with defined polarity (13') inside the hollow stem (12) of the piston (4) in a floating manner, that is, physically independent from the spool (14), and therefore, when said spool is excited, an axial movement of the rod takes place (13') due to its ferrous load or magnetism of same polarity as the aforementioned spool (14), which enables it to also act as bidirectional hydraulic brake, as stated above.

Obviously, physical independence between the rod (13') and the spool (14) forces said rod to be equipped with at least two leak-tight contact or guiding points with the hollow interior of the stem (12), as clearly shown in figure 2.

Finally, it is worth pointing out that in said embodiment, the third external balance chamber (17) is equipped with two fixed opposite pistons (19), with tracts (21), which are commanded by valve devices seating on spring valves (22) to allow pressure variation in the compression (7) and extension (5) chambers during piston strokes (4), communicated through a tract (18), said opposing fixed pistons acting as stabilizers of the gas pressure contained in the gas or lung body (20), allowing to obtain a more controlled rod oscillation (13) whenever the magnetic field generated by the spool (14) is not enough to stabilize it, due to its magnetism, thus obtaining a hydraulic force proportional to the intensity applied by the controller (23) of the magnetorheological system that is advocated when the rod (13) is not acting as bidirectional electromagnetic hydraulic restrictor of the damper itself (2) but as material that provides the magnetic field on the rheological fluid circulating through the stem (13).

## Claims

1. Pro-active magnetorheological suspension system, which, comprising a spring (1) associated to a damper (2) made up by a cylinder (3) with a sliding piston (4), by means of which two chambers (5 and 7) are established, the first one for expansion and the second for compression), mutually communicated in a calibrated manner, is **characterized in that** it includes a third external balance chamber (17) equipped with at least one fixed piston (19), tracts that are commanded by valve devices seating on spring valves (22) in order to allow changing the pressure in the extension chamber (5) and mainly in the compression (7) chamber during piston (4) strokes, communicated by means of a tract (18); the electromagnetic means that allow to change fluid viscosity inside the hollow stem (12) emerging from the main piston (4) have been foreseen, thus allowing to obtain a variation in the hydraulic force of the damper itself (2).

2. Pro-active magnetorheological suspension system, as per claim 1, **characterized in that** the electromagnetic means for the variation of fluid viscosity, are made up by means of a spool (14) assembled on the end of a rod (13) concentrically located inside the hollow stem (12), the spool (14) being supplied by means of a controller (23) that generates a signal of variable intensity, producing a variation in the magnetic field generated by the spool (14), said magnetic field being applied to the circulating fluid through the top of the hollow stem (12), by means of the rod (13), resulting in a variation of the viscosity of said fluid and, thus, in the variation of the hydraulic force of the damper (2).

3. Pro-active magnetorheological suspension system, according to the foregoing claims, **characterized in that** the fluid is a rheological fluid consisting of a base carrier fluid with iron particles in suspension.

4. Pro-active magnetorheological suspension system, according to the foregoing embodiments, **characterized in that** the rod (13') established axially inside the hollow stem (12) is physically independent from the electromagnetic spool (14), being assembled concentrically and leak-tight in its housing in floating manner, due to its ferrous load or magnetism of the same polarity as the mentioned spool (14), that is, with the possibility of axial movement with respect to said spool (14) as a result of the intensity changes originating the magnetic field thereof, in a way such that it acts as conductor means of the generated magnetic field, as well as bidirectional electromechanical hydraulic restrictor on the holes or hydraulic recovery tracts of the aforementioned hollow stem (12) against the stroke of the main piston (4), in substitution of the previous extension spring, and its complementary guide bushing.

5. Pro-active magnetorheological suspension system, as per the foregoing claim, **characterized in that** it includes a third external balance chamber (17) equipped with two fixed opposite pistons (19), tracts that are commanded by valve devices (22) to allow pressure variation in the compression (7) and extension (5) chambers during piston (4) strokes communicated through a tract (18); said fixed opposite pistons acting as stabilizers of the gas pressure contained in the lung (20), allowing to obtain a more controlled rod (13') oscillation when the magnetic field generated by the spool (14) is not enough to stabilize it due to its magnetism. Thus obtaining a hydraulic force proportional to the intensity applied by the controller (23) of the magnetorheological system advocated when the rod (13') is not acting as electromagnetic hydraulic restrictor of the damper itself (2) but as material that provides the magnetic field on the rheological fluid circulating through the stem (13').
